# EUROPÄISCHE PATENTSCHRIFT

(11) **EP 2 582 873 B1**
(45) Veröffentlichungstag und Bekanntmachung des Hinweises auf die Patenterteilung: **02.04.2014**
(21) Anmeldenummer: 11725082.9
(22) Anmeldetag: 14.06.2011
(51) Int. Cl.: D06F 58/28, D06F 39/00

(54) **WÄSCHEBEHANDLUNGSGERÄT UND VERFAHREN ZUM BETREIBEN EINES WÄSCHEBEHANDLUNGSGERÄTS**
WASHING MACHINE AND METHOD FOR OPERATION OF A WASHING MACHINE
APPAREIL DE TRAITEMENT DE LINGE ET PROCÉDÉ PERMETTANT DE FAIRE FONCTIONNER UN APPAREIL DE TRAITEMENT DE LINGE

(30) Priorität: 15.06.2010 DE 102010030062
(43) Veröffentlichungstag der Anmeldung: 24.04.2013
(73) Patentinhaber: BSH Bosch und Siemens Hausgeräte GmbH, 81739 München (DE)
(72) Erfinder: SCHNEIDER, Thomas, 13467 Berlin (DE); MOSCHÜTZ, Harald, 14979 Großbeeren (DE)
(86) Internationale Anmeldenummer: PCT/EP2011/059768
(87) Internationale Veröffentlichungsnummer: WO 2011/157672

(56) Entgegenhaltungen:
- EP-A2- 0 134 609
- JP-A- 7 275 561
- JP-A- 9 239 197
- US-A- 4 819 237
- US-A1- 2009 300 854

## Beschreibung

Die Erfindung betrifft ein Wäschebehandlungsgerät, welches dazu eingerichtet ist, mindestens ein Wäschebehandlungsprogramm durchzuführen. Die Erfindung betrifft ferner ein Verfahren zum Betreiben eines Wäschebehandlungsgeräts im Fall einer Stromunterbrechung.

Es sind Wäschetrocknungsgeräte (Waschtrockner und Wäschetrockner) bekannt, bei denen mittels einer Temperatur-, Energie- oder Zeitmessung entschieden wird, wann eine Heizung abgeschaltet werden muss, um eine gewünschte Restfeuchte einer Wäsche an einem Ende eines Trocknungsprogramms zu erhalten. Ein Stromausfall hat, je nachdem, wie lange der Prozess unterbrochen war, eine unterschiedlich starke Abkühlung von Wäsche und Prozessmedium (Luft, Lauge usw.) zur Folge. Je nach Stärke der Abkühlung wird im wieder aufgenommenen Programmablauf wenig mehr oder deutlich mehr Energie und Zeit benötigt werden als ursprünglich vorausberechnet. Durch eine kurzzeitige Unterbrechung werden die Temperaturverläufe typischerweise nur unwesentlich beeinflusst. Bei einer längeren Abschaltung verändern sich die Temperaturverhältnisse in dem Wäschetrocknungsgerät jedoch so stark, dass die vorausberechneten Abschalt- oder Beendigungskriterien (z.B. ein Temperaturabschaltkriterium, bei dem das Wäschetrocknungsgerät mit Erreichen eines vorbestimmten Temperaturwerts, z.B. einer Differenztemperatur, abgeschaltet wird) möglicherweise nicht mehr gültig sein mögen und als eine Alternative nur ein ungenaueres Abschalten über die Zeit und oder den Energieverbrauch möglich ist.

Beispielsweise können bei einem Wäschetrocknungsgerät Sensordaten jeweils eines Temperatursensors vor und hinter einem Kondensator aufgenommen werden und folgend eine Differenztemperatur als ein Maß dafür verwendet werden, wann der Trocknungsprozess abgeschaltet werden kann. So kann eine höher werdende Differenztemperatur auf einen geringer werdenden Effekt des Kondensators hindeuten, was wiederum auf eine trockener werdende Luft hindeutet. Alternativ können z.B. auch ein einziger Temperatursensor und/oder mindestens ein Feuchtesensor verwendet werden. Zusätzlich können, basierend auf einem Ergebnis einer Beladungsmessung während einer Aufheizphase des Trocknungsprogramms, minimale und maximale Werte für die Dauer und den Energiebedarf des Trocknungsprogramms festgelegt werden. Nur innerhalb dieser Werte kann dann mittels des Temperatursignal abgeschaltet werden.

Kommt es zu einem Stromausfall während einer Haupttrocknungsphase (einer Trocknungsphase nach der Aufwärmphase, welche einer Trocknung der Wäsche dient), so wird die Haupttrocknungsphase anschließend in jedem Fall so lange fortgesetzt, bis die vorausberechnete maximale Energiemenge verbraucht worden ist. Wenn der Stromausfall nur von kurzer Dauer ist, führt das beschriebene Vorgehen typischerweise zu einem starken Übertrocknen der Wäsche und zu einem unnötig hohen Energieverbrauch. Ein Stromausfall während der Beladungsmessung der Aufheizphase wird nach derzeitigem Stand ignoriert. Dies führt bei einem kurzen Ausfall nur zu einer geringfügigen Beeinflussung der Aufheizphase und/oder der Haupttrocknungsphase. Dauert der Stromausfall Jedoch länger, so wird sich die Wäsche in dieser Zeit abkühlen, und die Aufheizmessung wird das Wäschetrocknungsgerät dazu veranlassen, von einer großen Wäschemenge auszugehen und einen zu hohen Energie- und Zeitbedarf anzusetzen. Auch so wird es zum Übertrocknen und zu einem unnötig hohen Energieverbrauch kommen.

Ein Haushaltsgerät und ein Verfahren zum Betreiben des Haushalsgeräts, bei dem die Dauer einer Stromunterbrechung festellbar ist, sind aus DE 31 10 85 C2 bekannt. Bei einem solchen Haushaltsgerät wird abhängig von der Dauer der Stromunterbrechung entschieden, ob ein zum Zeitpunkt des Stromausfalls gestartetes Programm mit dem Zustand vor der Stromunterbrechung wiederaufgenommen wird oder ob eine Ruhephase gestartet wird. Jedoch wird bei einer Wiederaufnahme des Programms das Programm nicht an die Dauer des Stromausfalls angepasst, sondern das ursprünglich gestartete Programm wird mit den letzten bekannten Parametern fortgeführt.

Ein Wäschebehandlungsgerät und Betriebsverfahren für ein solches Gerät mit einer Stromunterbrechungserkennung ist auch aus US 2009/0300854 A1 bekannt. Bei einem solchen Wäschebehandlungsgerät wird bei einer Stromunterbrechungsdauer, die kleiner als eine vorbestimmte Dauer ist, das Behandlungsprogramm fortgeführt oder bei einer längeren Stromunterbrechung abhängig von der Art einer zum Zeitpunkt des Stromausfalls angefangenen Wäschebehandlungsphase die Wäschebehandlungsphase mit dem Zustand vor der Stromunterbrechung wiederaufgenommen oder wiederholt.

Ein weiteres Haushaltsgerät mit einer Netzausfallerkennung, also einer Stromunterbrechung des Versorgungsnetzes, ist aus DE 199 43 124 A1 bekannt. Bei diesem Haushaltgerät wird überprüft, ob eine Netzspannung vor dem Netzschalter anliegt. Somit kann zwischen einem gewollten Ausschalten des Haushaltsgeräts und einer versorgungsnetzseitigen Stromunterbrechung unterschieden werden.

Ein Wäschebehandlungsgerät zum Trocknen von Wäsche ist ferner in JP 09-239197 A offenbart. Dieses Wäschebehandlungsgerät kann nach der Beendigung eines Programmablaufes, die aufgrund einer Stromunterbrechung erfolgte, in dem darauffolgenden Programm die Heizleistung automatisch reduzieren. Dazu verfügt es über eine Speichereinrichtung, in der der Status der Programmbeendigung gespeichert wird. Nachteilig an diesem Wäschebehandlungsgerät ist, dass ein durch die Stromunterbrechung beendetes Programm nicht weitergeführt wird, sondern ein neues Programm gestartet werden muss und somit unnötiger Weise diverse Verfahrensachritte wiederholt werden.

Es ist die Aufgabe der vorliegenden Erfindung, die Nachteile des Standes der Technik zumindest teilweise zu beseitigen und insbesondere ein von einer Stromunterbrechung gestopptes Programm zu beenden und dabei eine Möglichkeit zur Senkung eines Energieverbrauchs eines Wäschebehandlungsgeräts nach einer Stromunterbrechung bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Es ist dazu ein Wäschebehandlungsgerät eingerichtet, mindestens ein Wäschebehandlungsprogramm durchzuführen, eine Dauer einer Stromunterbrechung festzustellen und nach der Stromunterbrechung ein während der Stromunterbrechung gelaufenes Wäschebehandlungsprogramm an die Dauer der Stromunterbrechung anzupassen und weiterzuführen. Ferner ist die Dauer in eine kurze Dauer, welche gleich oder kürzer als ein vorbestimmter Schwellwert ist, und eine lange Dauer welche größer dem vorbestimmten Schwellwert ist, unterteilt und das Wäschebehandlungsgerät dazu eingerichtet, das Wäschebehandlungsprogramm abhängig von einer Art der Dauer unterschiedlich anzupassen. Dadurch kann der Vorteil erzielt werden, dass die Anpassung abhängig davon, ob sich ein signifikanter Effekt auf das Wäschebehandlungsverhalten ergibt oder nicht, unterschiedlich erfolgen kann, was wiederum eine besonders flexible und auf eine Energieeinsparung abgestimmte sowie nutzerfreundliche Reaktion auf die Stromunterbrechung ermöglicht.

Die Anpassung des Wäschebehandlungsprogramms erfolgt durch eine Anpassung der Betriebsparemeter. Dadurch ergibt sich der Vorteil, dass ein Wäschebehandlungsprogramm im Fall einer Stromunterbrechung so fortgesetzt werden kann, dass das Programm vollständig fertig gestellt werden kann und dabei der Energiebedarf nicht unnötig hoch ausfällt. Somit wird beispielsweise vermieden, dass ein Heizschritt unnötigerweise wiederholt werden muss obwohl er vor der Stzromunterbrechung schon fast beendet war. Das heißt der Betriebsparameter der Heizdauer kann an die Dauer der Unterbrechung angepasst werden.

Die Fähigkeit des Wäschebehandlungsgeräts, die Dauer der Stromunterbrechung festzustellen, kann beispielsweise dadurch erreicht werden, dass das Wäschebehandlungsgerät eine 'Echtzeituhr' aufweist, welche die Uhrzeit auch bei einem Ausschalten des Wäschebehandlungsgeräts, und damit auch bei einer Stromunterbrechung, behält bzw. fortschreibt. Die Echtzeituhr kann insbesondere mit einer Steuereinheit des Wäschebehandlungsgeräts gekoppelt sein, so dass die Steuereinheit, welche das Wäschebehandlungsgerät mittels des Wäschebehandlungsprogramms steuern kann, die Dauer der Stromunterbrechung zur Anpassung des Wäschebehandlungsprogramms nutzen kann. Die Steuereinheit kann dazu die Feststellung der Stromunterbrechung und/oder deren Dauer auch mit einer bestimmten Phase des Wäschebehandlungsprogramms korrelieren, z.B. mit der Aufheizphase und/oder der Haupttrocknungsphase des Wäschetrocknungsgerats.

Die Stromunterbrechung kann z.B. ein Stromausfall eines öffentlichen Versorgungsnetzes sein oder eine gesteuerte Stromunterbrechung sein, z.B. mittels einer Zeitschaltuhr. Die gesteuerte Stromunterbrechung kann auch eine gezielte Abschaltung des Wäschebehandlungsgaräts im Rahmen eines Energiemanagements von vernetzten Hausgeräten ("Smart Grid") sein, z.B. um während einer Spitzenstromzeit Strom zu sparen. Im Rahmen eines solchen Energiemanagement könnte die Dauer der gesteuerten Stromunterbrechung über eine Kommunikationsschnittstelle von einem externen Gerät, beispielsweise von einem ein intelligenten Hausstromzähler oder einer Kommunikationseinrichtung des Energieversorgers, vorgegeben werden und an das Wäschebehandlungsgerät übermitteit werden. In einem solchen Fall könnte auf eine Echtzeituhr verzichtet werden oder die Echtzeituhr wird zusätzlich eingesetzt, um die sonstigen Stromunterbrechungen feststellen zu können. Zum Feststellen der Dauer der gesteuerten Stromunterbrechung genügt es dann, dass die Steuereinrichtung des Wäschebehandlungsgeräts eine Leseeinrichtung aufweist, die dazu eingerichtet ist, die vom externen Gerät übermittelte Dauer der Stromunterbrechung auszuwerten. Mit dem beschriebenen Wäschebehandlungsgerät lässt sich eine Energieeinsparung oder kostengünstigere Nutzung im Rahmen des Energiemanagements wirkungsvoller erreichen als mit herkömmlichen Haushaltsgeräten.

Es ist eine Ausgestaltung, dass das Wäschebehandlungsgerät dazu eingerichtet ist, das Wäschebehandlungsprogramm bei einer kurzen Dauer der Stromunterbrechung nicht anzupassen. Dadurch kann der Vorteil erzielt werden, dass die Anpassung nur durchgeführt wird, wenn sich durch die Stromunterbrechung ein signifikanter Effekt ergibt, was wiederum für kurze Dauern ein schnelles Weiterführen des Wäschebehandlungsprogramm ermöglicht, was wiederum die Wäschebehandlungszeit verkürzt und einen Energieverbrauch gering hält. Diese Ausgestaltung kann insbesondere für häufig erfolgende kurze Stromunterbrechungen von Vorteil sein.

Es ist ferner das Wäschebehandlungsgerät dazu eingerichtet, das Wäschebehandlungsprogramm abhängig von einer Art einer während der Stromunterbrechung laufenden Wäschebehandlungsphase unterschiedlich anzupassen. Dadurch kann eine noch energiesparendere und nutzerfreundlichere Anpassung ermöglicht werden.

Es ist eine Weiterbildung, dass der Schwellwert zur Unterscheidung zwischen einer kurzen Dauer und einer langen Dauer der Stromunterbrechung für unterschiedliche Wäschebehandlungsphase unterschiedlich ist. Dadurch kann die Anpassung noch flexibler und energiesparender ausgelegt werden.

Es ist dazu eine Weiterbildung, dass eine kurze Dauer der Stromunterbrechung bei einer Hauptbehandlungsphase (z.B. einer Haupttrocknungsphase) weniger als ca. 5 min bis 10 min, insbesondere weniger als ca. 5 min, dauert. Es ist dazu eine Weiterbildung, dass in einer Phase, in welcher Abschalt- oder Beendigungskriterien (maximale Zeit, maximale Energie usw.) berechnet werden, z.B. während einer Aufheizphase, eine kurze Dauer nicht mehr als ca. 10 s dauert, da sonst ein Fehler In der Berechnung erheblich werden kann und zu einer signifikanten Energieverschwendung führt.

Insbesondere für den Fall, dass das Wäschebehandlungsprogramm abhängig von einer Art einer während der Stromunterbrechung laufenden Wäschebehandlungsphase unterschiedlich anpassbar ist, ist die Wäschebehandlungsphase eine Hauptbehandlungsphase und das Wäschebehandlungsgerät dazu eingerichtet ist, auf der Grundlage der festgestellten Dauer der Stromunterbrechung einen zusätzlichen Zeitbedarf und/oder Energiebedarf zu berechnen und zu einem vor der Stromunterbrechung ursprünglich berechneten Zeitbedarf und/oder Energiebedarf hinzuzufügen. Dadurch wird eine besonders einfache und energetisch effektive Anpassung ermöglicht. Alternativ können der Zeitbedarf und/oder der Energiebedarf mit den nach der Stromunterbrechung vorherrschenden Betriebsaramertern (Beladung, Temperatur, Feuchte usw.) und unter Kenntnis der Dauer der Stromunterbrechung von Grund auf neu berechnet werden. Die Hauptbehandlungsphase ist insbesondere eine Wäschebehandlungsphase, welche primär der Wäschebehandlung (Waschen, Trocknen usw.) dient und sich z.B. einer Aufheizphase anschließen kann. Es kann dazu eine spezielle Weiterbildung sein, dass das Wäschebehandlungsgerät ein Wäschetrocknungsgerät ist und die Wäschebehandlungsphase insbesondere eine Haupttrocknungsphase ist. Es kann eine andere spezielle Weiterbildung sein, dass das Wäschebehandlungsgerät ein Wäschewaschgerät ist und die Wäschebehandlungsphase insbesondere eine Hauptwaschphase ist.

Die Wäschebehandlungsphase kann auch eine Hauptbehandlungsphase sein, die Dauer der Stromunterbrechung eine lange Dauer sein (z.B. von mehr als 5 min) und das Wäschebehandlungsgerät dazu eingerichtet sein, nach der Stromunterbrechung eine Wiederaufheizphase in das Wäschebehandlungsprogramm einzufügen, mittels derer eine Temperatur zumindest eines Prozessmediums an ein Niveau vor der Stromunterbrechung angeglichen wird und danach die Haupttrocknungsphase wie bei einer kurzen Dauer der Stromunterbrechung weiterzuführen (ggf. also sogar unverändert), insbesondere die Haupttrocknungsphase temperaturgesteuert zu beenden. Die Anpassung besteht somit In der Angleichung des Betriebszustands des Wäschebehandlungsgeräts an einen Zustand vor der Stromunterbrechung, wodurch vorteilhafterweise eine Steuerung der Haupttrocknungsphase als solcher nicht oder nur geringfügig geändert zu werden braucht.

Es ist allgemein eine Ausgestaltung, dass das Wäschebehandlungsgerät ein Wäschetrocknungsgerät ist. Das Wäschetrocknungsgerät kann beispielsweise ein Wäschetrockner oder ein Waschtrockner (Waschmaschine mit Wäschetrocknungsfunktion) sein. Ein typisches Prozessmedium ist Luft.

Insbesondere für den Fall, dass das Wäschebehandlungsgerät dazu eingerichtet ist, das Wäschebehandlungsprogramm bei einer kurzen Dauer der Stromunterbrechung nicht anzupassen, das Wäschebehandlungsprogramm abhängig von einer Art einer während der Stromunterbrechung laufenden Wäschebehandlungsphase unterschiedlich anzupassen und das Wäschebehandlungsgerät ein Wäschetrocknungsgerät ist, ist es eine weitere Ausgestaltung, dass die Wäschebehandlungsphase eine Haupttrocknungsphase ist. Die Haupttrocknungsphase reagiert vergleichsweise gutmütig auf eine Stromunterbrechung für die kurze Dauer (z.B. von weniger als ca. 5 bis 10 min) und ist daher für die Nichtanpassung für die kurze Dauer gut geeignet.

Es ist eine Weiterbildung, dass das Wäschebehandlungsgerät dann dazu eingerichtet ist, die Haupttrocknungsphase temperaturgesteuert zu beenden, was aufgrund der bereits erfolgten Aufheizung des Wäschebehandlungsgeräts, der Wäsche und des Prozessmediums einen nur geringen Fehler bei der Wäschebehandlung (z.B. einer Restfeuchte) bei einem wenig erhöhten oder sogar verringerten Energieverbrauch ermöglicht.

Insbesondere für den Fall, dass die Dauer allgemein in eine kurze Dauer, welche gleich oder kürzer als ein vorbestimmter Schwellwert ist, und eine lange Dauer, welche größer dem vorbestimmten Schwellwert ist, unterteilt ist und das Wäschebehandlungsgerät dazu eingerichtet ist, das Wäschebehandlungsprogramm abhängig von einer Art der Dauer unterschiedlich anzupassen, sowie dafür, dass das Wäschebehandlungsgerät dazu eingerichtet ist, das Wäschebehandlungsprogramm abhängig von einer Art einer während der Stromunterbrechung laufenden Wäschebehandlungsphase unterschiedlich anzupassen und das Wäschebehandlungsgerät ein Wäschetrocknungsgerät ist, ist es eine Ausgestaltung, dass die Wäschebehandlungsphase eine Haupttrocknungsphase ist, die Dauer der Stromunterbrechung eine lange Dauer ist und das Wäschebehandlungsgerät dazu eingerichtet ist, die Haupttrocknungsphase mit einem Erreichen einer vorbestimmten maximalen Energiemenge und/oder maximalen Trocknungszeit (oder eines anderen vor der Stromunterbrechung bestimmten Abbruchparameters) zu beenden. Dadurch kann eine Energiemenge sicher begrenzt bleiben, und eine Übertrocknung ist aufgrund der langen Dauer der Stromunterbrechung häufig nicht erheblich. Zudem ist diese Ausgestaltung besonders einfach implementierbar.

Insbesondere für den Fall, dass das Wäschebehandlungsprogramm abhängig von einer Art einer während der Stromunterbrechung laufenden Wäschebehandlungsphase unterschiedlich anpassbar ist und das Wäschebehandlungsgerät ein Wäschetrocknungsgerät ist, ist es eine weitere Ausgestaltung, dass die Wäschebehandlungsphase eine Aufheizphase ist.

Es ist eine spezielle Ausgestaltung, dass die Dauer der Stromunterbrechung eine lange Dauer ist (länger als ca. 10 s) und das Wäschebehandlungsgerät dazu eingerichtet ist, die Aufheizphase nach einer Stromunterbrechung erneut durchzuführen. Dabei wird ausgenutzt, dass die aus der Aufheizphase bestimmten Steuerungswerte für die folgenden Betriebsphasen (z.B. die Haupttrocknungsphase) erneut in sich konsistent und insbesondere unter Kenntnis der Dauer der Stromunterbrechung präzise bestimmbar sind.

Es ist eine für eine genaue Berechnung der Steuerungsparameter vorteilhafte Weiterbildung, dass das Wäschebehandlungsgerät dazu eingerichtet ist, nach der Stromunterbrechung eine Rücksetzphase in das Wäschebehandlungsprogramm einzufügen, mittels derer ein definierter Zustand des Wäschebehandlungsgeräts hergestellt wird.

Es ist außerdem eine Ausgestaltung, dass das Wäschebehandlungsgerät dazu eingerichtet ist, eine Beladungsmessung zu wiederholen. Insbesondere die Beladungsmessung kann dazu dienen, die Menge an zu verdampfender, in der Wäsche gebundener Flüssigkeit und daraus eine (insbesondere maximale) Energiemenge und/oder eine (insbesondere maximale) Trocknungszeit zu berechnen. Die erneute Beladungsmessung kann vor oder während der Aufheizphase durchgeführt werden. Anstelle einer Beladungsmessung können, je nach Ausstattung des Geräts, auch eine Temperaturmessung und/oder eine direkte Feuchtemessung durchgeführt werden. Die Berechnung der Abschalt- oder Beendigungskriterien (Zeit, Energie usw.) kann beispielsweise mittels einer Temperaturmessung so durchgeführt werden, dass während der Aufheizphase gemessen wird, wie schnell sich die zu trocknende Wäsche bei einer vordefinierten Energiezufuhr erwärmt: Diese Berechnung ist vergleichsweise empfindlich, so dass eine Stromunterbrechung eine erhebliche Auswirkung auf die Berechnung aufweist und folglich vorteilhafterweise eine kurze Dauer im Bereich von nur ca. 10 s oder weniger liegt. Falls die Aufheizphase nur kurz unterbrochen ist (z.B. für weniger als ca. 10 s), kann sie ohne Anpassung weitergeführt werden.

Es ist noch eine Ausgestaltung, dass (insbesondere falls die Wäschebehandlungsphase eine Aufheizphase ist) die Dauer der Stromunterbrechung eine lange Dauer ist und das Wäschebehandlungsgerät dazu eingerichtet ist, eine Berechnung von Abschaltwerten für z.B. die Aufheizphase und/oder die Haupttrocknungsphase auf der Grundlage der Dauer neu zu berechnen. Dadurch kann eine besonders präzise und energiesparende Wäschebehandlung durchgeführt werden.

Es ist noch eine Ausgestaltung, dass das Wäschebehandlungsgerät ein Wäschewaschgerät ist. Das Wäschewaschgerät kann z.B. eine Waschmaschine oder ein Waschtrockner sein. Das Prozessmedium kann insbesondere Wasser oder Lauge sein. So kann auch das Wäschewaschgerät zum Waschen der Wäsche eine Aufheizphase und/oder eine zu der Haupttrocknungsphase analoge Hauptwaschphase aufweisen. Auch hier können kurze Stromunterbrechungen ohne eine Anpassung des Wäschebehandlungsprogramms ignoriert werden, während lange Stromunterbrechungen, ggf. von der Wäschebehandlungsphase abhängige, Anpassungen hervorrufen. Die Anpassungen können auch hier eine Anpassung von Abschaltwerten oder anderen Steuerungsparametern als auch ein Einfügen von Korrekturphasen (z.B. einer Wiederaufheizphase oder einer Rücksetzphase) umfassen.

Die Aufgabe wird auch gelöst mittels eines Verfahrens zum Betreiben eines Wäschebehandlungsgeräts, wobei eine Dauer einer Stromunterbrechung festgestellt wird und nach der Stromunterbrechung ein während der Stromunterbrechung gelaufenes Wäschebehandlungsprogramm an die Dauer der Stromunterbrechung angepasst und weitergeführt wird und die weiteren Merkmale des Anspruchs 12 umfasst sind. Dies ergibt die gleichen Vorteile wie bereits für das Wäschebehandlungsgerät beschrieben.

Das Verfahren kann analog zu dem oben beschriebenen Wäschebehandlungsgerät ausgestaltet werden.

In den folgenden Figuren wird die Erfindung anhand eines Ausführungsbeispiels schematisch genauer beschrieben. Dabei können zur Übersichtlichkeit gleiche oder gleichwirkende Elemente mit gleichen Bezugszeichen versehen sein.
- Fig.1: zeigt eine Skizze eines erfindungsgemäßen Wäschetrocknungsgeräts; und
- Fig.2: zeigt ein mögliches Ablaufdiagramm eines Wäschebehandlungsprogramms des Wäschetrocknungsgeräts aus Fig.1.

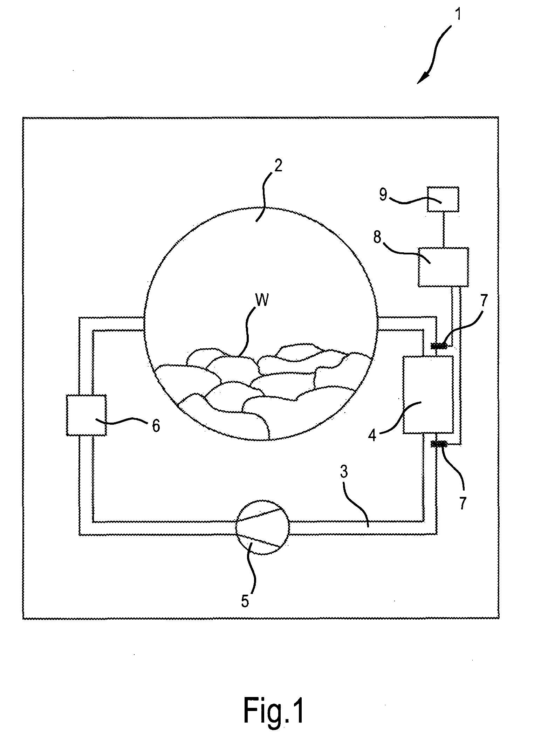

Fig.1 zeigt eine Skizze eines Wäschetrocknungsgeräts in Form eines Umluft-Wäschetrockners 1. Der Wäschetrockner 1 weist einen Wäschebehandlungsraum 2 (z.B. eine drehbare Wäschetrommel) zum Aufnehmen von zu trocknender Wäsche W auf. Der Wäschebehandlungsraum 2 stellt einen Teil eines umlaufenden Prozessluftkanals 3, dar. Der Prozessluftkanal 3 weist ferner mindestens einen Kondensator 4, ein Gebläse 5 und eine Heizung 6 auf. Durch das Gebläse 5 wird Prozessluft in den Wäschebehandlungsraum 2 geblasen, wobei sie vorher durch die Heizung 6 erwärmt worden ist. Die in den Wäschebehandlungsraum 2 einströmende warme, trockene Luft erwärmt die Wäsche W, wodurch diese Feuchtigkeit an die Luft abgibt. Die nun feuchtere Prozessluft wird aus dem Wäschebehandlungsraum 2 zu dem Kondensator 4 herausgedrückt, wo die Prozessluft abkühlt und auskondensiert. Die nun kältere und wieder trockenere Prozessluft wird folgend durch das Gebläse 5 wieder durch die Heizung 6 in den Wäschebehandlungsraum 2 gefördert.

Zur Bestimmung eines Feuchtegrads der Prozessluft und damit korreliert eines Feuchtegrads der Wäsche W weist der Wäschetrockner 1 vor und hinter dem Kondensator jeweils einen Temperatursensor 7 in den Prozessluftkanal 3 auf. Mittels einer Differenztemperatur zwischen den beiden Temperatursensoren 7 kann auf einen Feuchtegrad der Prozessluft zurückgeschlossen werden. Alternativ oder zusätzlich kann an dem Wäschebehandlungsraum 2 mindestens ein Feuchtesensor (o.Abb.) zum direkten Bestimmen eines Feuchtegrads der Wäsche W vorhanden sein. Auch können ein Beladungssensor und/oder eine Luftfeuchtigkeitssensor verwendet werden (o.Abb.). Jedoch ist das Verfahren insbesondere auch dann geeignet und vorteilhaft verwendbar, falls kein Feuchtesensor vorhanden ist.

Die beiden Temperatursensoren 7 (und/oder die anderen Sensoren) sind mit einer Steuereinheit 8 des Wäschetrockners 1 gekoppelt, welche aus den Sensordaten die Differenztemperatur berechnet und für eine Steuerung des Wäschetrockners 1 über ein Wäschetrocknungsprogramm verwendet. Die Steuereinheit 8 ist ferner mit einer Echtzeituhr 9 gekoppelt. Die Echtzeituhr 9 ist in der Lage, eine Uhrzeit auch bei einer Stromunterbrechung für eine erhebliche Zeit (Wochen oder Monate) zu behalten bzw. fortzuschreiben. Dadurch ist es der Steuereinheit 8 möglich, eine Dauer einer Stromunterbrechung zu bestimmen und diese Dauer zur Steuerung des Wäschetrockners 1, insbesondere durch eine Anpassung des Wäschebehandlungsprogramms, zu verwenden.

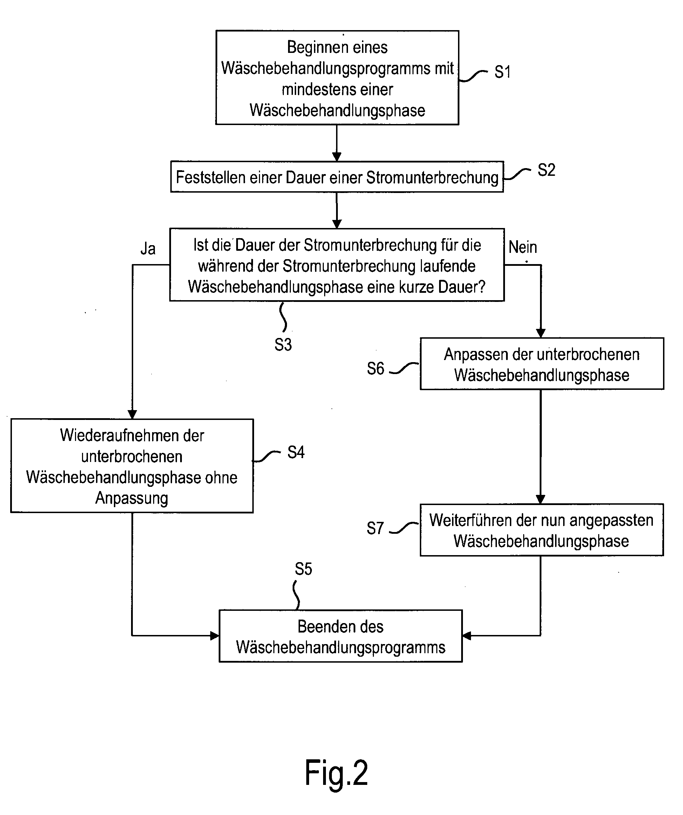

Fig.2 zeigt ein mögliches Ablaufdiagramm eines Wäschebehandlungsprogramms des Wäschetrockners 1.

In einem ersten Schritt S1 wird ein Wäschebehandlungsprogramm in Form eines Wäschetrocknungsprogramms gestartet. Das Wäschetrocknungsprogramm umfasst mindestens eine Aufheizphase zum Aufheizen von Wäsche W auf eine Arbeitstemperatur und folgend eine Haupttrocknungsphase, innerhalb der die Wäsche W bis zum Erreichen eines vorbestimmten Feuchtigkeitsgrads (z.B. 'bügelfeucht', 'schranktrocken' usw.) getrocknet wird, als Wäschebehandlungsphasen.

Während einer der Wäschebehandlungsphasen tritt eine Stromunterbrechung auf, z.B. durch eine Störung eines Versorgungsnetzes oder durch eine gezielte Abschaltung. Nach Beendigung der Stromunterbrechung bestimmt der Wäschetrockner 1 bzw. dessen Steuereinheit 8 in Schritt S2 mit Hilfe der Echtzeituhr 9 eine Dauer der Stromunterbrechung.

Diese Dauer wird mit der während der Stromunterbrechung laufenden Wäschebehandlungsphase in Beziehung gesetzt und ermittelt, ob die Dauer für diese Wäschebehandlungsphase eine kurze Dauer ist oder nicht (Schritt S3). So kann für die Aufheizphase eine Dauer von 1 Minute bereits eine lange Dauer darstellen (Schwellwert oder Grenzwert z.B. von 10 Sekunden), während diese Dauer für die Haupttrocknungsphase noch eine kurze Dauer darstellt (Schwellwert oder Grenzwert z.B. von 5 Minuten).

Ist die Dauer eine kurze Dauer ("Ja"), wird die unterbrochene Wäschebehandlungsphase ohne weitere Anpassung fortgesetzt, siehe Schritt S4. Ggf. müssen zuvor noch die Werte aktueller Betriebsparameter (Temperatur usw.) festgestellt werden, insbesondere wenn diese nur flüchtig gespeichert waren und deshalb während der Stromunterbrechung verloren gingen. Danach wird das Wäschebehandlungsprogramm bis zu seinem Ende weitergeführt (Schritt S5).

Ist die Dauer eine lange Dauer ("Nein"), wird die unterbrochene Wäschebehandlungsphase zunächst in einem Schritt S6 angepasst. Das Anpassen kann z.B. durch eine Aktivierung einer Wiederaufheizphase oder eine Neuberechnung der Abschalt- oder Beendigungskriterien (z.B. einer maximal erlaubten Betriebszeit oder Energiemenge) geschehen.

In einem folgenden Schritt S7 wird die zuvor unterbrochene Wäschebehandlungsphase weitergeführt, ggf. mit neuberechneten Werten. Danach wird das Wäschebehandlungsprogramm bis zu seinem Ende weitergeführt (Schritt S5)

Selbstverständlich ist die vorliegende Erfindung nicht auf das gezeigte Ausführungsbeispiel beschränkt.

So kann anstelle eines Wäschetrockners auch ein anderes Wäschetrocknungsgerät oder ein Wäschewaschgerät verwendet werden. Diese können sich beispielsweise in ihrer Ausstattung (Art der Sensoren und der angebotenen und implementierten Wäschebehandlungsprogramme) unterscheiden.

### Bezugszeichenliste

- 1: Wäschetrockner
- 2: Wäschebehandlungsraum
- 3: Prozessluftkanal
- 4: Kondensator
- 5: Gebläse
- 6: Heizung
- 7: Temperatursensor
- 8: Steuereinheit
- 9: Echtzeituhr
- W: Wäsche

## Patentansprüche

1. Wäschebehandlungsgerät (1), welches dazu eingerichtet ist, mindestens ein Wäschebehandlungsprogramm durchzuführen und eine Dauer einer Stromunterbrechung festzustellen (S2), wobei die Dauer in eine kurze Dauer, welche gleich oder kürzer als ein vorbestimmter Schwellwert ist, und eine lange Dauer, welche größer dem vorbestimmten Schwellwert ist, unterteilt ist, nach der Stromunterbrechung ein während der Stromunterbrechung gelaufenes Wäschebehandlungsprogramm an die Dauer der Stromunterbrechung anzupassen (S6), das Wäschebehandlungsprogramm abhängig von einer Art der Dauer und/oder von einer Art einer während der Stromunterbrechung laufenden Weschebehandlungsphase unterschiedlich anzupassen (S3, S4, S6) und das angepasste Wäschebehandlungsprogramm weiterzuführen (S7),
**dadurch gekennzeichnet, dass**
die Wäschebehandlungsphase eine Hauptbehandlungsphase ist und das Wäschebehandlungsgerät (1) dazu eingerichtet ist,
a) auf der Grundlage der festgestellten Dauer der Stromunterbrechung einen zusätzlichen Zeitbedarf und/oder Energiebedarf zu berechnen und zu einem vor der Stromunterbrechung ursprünglich berechneten Zeitbedarf und/oder Energiebedarf hinzuzufügen oder
b) nach der Stromunterbrechung eine Wiederaufheizphase in das Wäschebehandlungsprogramm einzufügen, mittels derer eine Temperatur zumindest eines Prozessmediums an ein Niveau vor der Stromunterbrechung angeglichen wird, wobei die Dauer der Stromunterbrechung eine lange Dauer ist, und
danach die Hauptbehandlungsphase wie bei einer kurzen Dauer der Stromunterbrechung weiterzuführen, insbesondere die Hauptbehandlungsphase temperaturgesteuert zu beenden.

2. Wäschebehandlungsgerät (1), nach Anspruch 1, **dadurch gekennzeichnet, dass** die Steuereinrichtung des Wäschebehandlungsgeräts eine Leseeinrichtung aufweist, die dazu eingerichtet ist, die von einem externen Gerät übermittelte Dauer der Stromunterbrechung auszuwerten.

3. Wäschebehandlungsgerät (1) nach Anspruch 1 oder 2, **dadurch gekennzeichnet, dass** das Wäschebehandlungsgerät (1) dazu eingerichtet ist, das Wäschebehandlungsprogramm bei einer kurzen Dauer der Stromunterbrechung nicht anzupassen (S4).

4. Wäschebehandlungsgerät (1) nach einem der vorhergehenden Ansprüche, **dadurch gekennzeichnet, dass** das Wäschebehandlungsgerät (1) ein Wäschetrocknungsgerät ist.

5. Wäschebehandlungsgerät (1) nach den Ansprüchen 1, 3 und 4, **dadurch gekennzeichnet, dass** die Wäschebehandlungsphese eine Haupttrocknungsphase ist und das Wäschebehandlungsgerät (1) insbesondere dazu eingerichtet ist, die Haupttrocknungsphase temperaturgesteuert zu beenden.

6. Wäschebehandlungsgerät (1) nach den Ansprüchen 1 und 4, **dadurch gekennzeichnet, dass** die Wäschebehandlungsphase eine Haupttrocknungsphase ist, die Dauer der Stromunterbrechung eine lange Dauer ist und das Wäschebehandlungsgerät (1) dazu eingerichtet ist, die Haupttrocknungsphase mit einem Erreichen einer vorbestimmten maximalen Energiemenge und/oder maximalen Trocknungszeit zu beenden.

7. Wäschebehandlungsgerät (1) nach den Ansprüchen 1 und 4, **dadurch gekennzeichnet, dass** die Waschebehandlungsphese eine Aufheizphase ist.

8. Wäschebehandlungsgerät (1) nach den Ansprüchen 1 und 7, **dadurch gekennzeichnet, dass** die Dauer der Strumunterbrechung eine lange Dauer ist und das Wäschebehandlungsgerät (1) dazu eingerichtet ist, die Aufheizphase erneut durchzuführen.

9. Wäschebehandlungsgerät (1) nach einem der Ansprüche 7 oder 8, **dadurch gekennzeichnet, dass** das Wäschebehandlungsgerät (1) dazu eingerichtet ist, eine Beladungsmessung zu wiederholen.

10. Wäschebehandlungsgerät (1) nach den Ansprüchen 6 und 7, **dadurch gekennzeichnet, dass** die Dauer der Stromunterbrechung eine lange Dauer ist und das Wäschebehandlungsgerät (1) dazu eingerichtet ist, eine Berechnung von Abschaltwerten für die Aufheizphase und/oder die Haupttrocknungsphase auf der Grundlage der Dauer neu zu berechnen.

11. Wäschebehandlungsgerät (1) nach einem der vorhergehenden Ansprüche, **dadurch gekennzeichnet, dass** das Wäschebehandlungsgerät (1) ein Wäschewaschgerät ist.

12. Verfahren zum Betreiben eines Wäschebehandlungsgeräts (1), bei dem eine Dauer der Stromunterbrechung festgestellt wird (S2), wobei die Dauer in eine kurze Dauer, welche gleich oder kürzer als ein vorbestimmter Schwellwert ist, und eine lange Dauer, welche größer dem vorbestimmten Schwellwert ist, unterteilt ist, und bei dem nach der Stromunterbrechung ein während der Stromunterbrechung gelaufenes Wäschebehandlungsprogramm an die Dauer der Stromunterbrechung angepasst (S6), das Wäschebehandlungsprogramm abhängig von einer Art der Dauer und/oder von einer Art einer während der Stromunterbrechung laufenden Wäschebehandlungsphase unterschiedlich angepasst wird (S3, S4, S6) und das angepasste Wäschebehandlungsprogramm weitergeführt (S7) wird **dadurch gekennzeichnet, dass**
die Wäschebehendlungsphase eine Hauptbehandlungsphase ist, wobei
a) auf der Grundlage der festgestellten Dauer der Stromunterbrechung ein zusätzlicher Zeitbedarf und/oder Energiebedarf berechnet und zu einem vor der Stromunterbrechung ursprünglich berechneten Zeitbedarf und/oder Energiebedarf hinzugefügt wird oder
b) nach der Stromunterbrechung eine Wiederaufheizphase in das Wäschebehandlungsprogramm eingefügt wird, mittels derer eine Temperatur zumindest eines Prozessmediums an ein Niveau vor der Stromunterbrechung angeglichen wird, wobei die Dauer der Stromunterbrechung eine lange Dauer ist, und
danach die Hauptbehandlungsphase wie bei einer kurzen Dauer der Stromunterbrechung weitergeführt wird, insbesondere die Hauptbehandlungsphase temperaturgesteuert beendet wird.

## Claims

1. Laundry treatment appliance (1), which is arranged to perform at least one laundry treatment program and to determine a duration of a power interruption (S2), wherein the duration is divided into a short duration equal to or shorter than a predetermined threshold value and a long duration greater than the predetermined threshold value, to adapt, after the power interruption, a laundry treatment program, which has run during the power interruption, to the duration of the power interruption (S6), to differently adapt the laundry treatment program in dependence on a kind of the duration and/or on a kind of a laundry treatment phase running during the power interruption (S3, S4, S6) and to continue the adapted laundry treatment program (S7), **characterised in that**
the laundry treatment phase is a main treatment phase and the laundry treatment appliance (1) is arranged
a) to calculate an additional time requirement and/or energy requirement on the basis of the determined duration of the power interruption and add it to a time requirement and/or energy requirement originally calculated before the power interruption or
b) to introduce into the laundry treatment program after the power interruption a reheating phase by means of which a temperature of at least one process medium is equated to a level before the power interruption, wherein the duration of the power interruption is a long duration, and
thereafter to continue the main treatment phase as the case of a short duration of the power interruption, particularly to end the main treatment phase in temperature-controlled manner.

2. Laundry treatment appliance (1) according to claim 1, **characterised in that** the control device of the laundry treatment appliance comprises a reading device arranged to evaluate the duration, which is communicated by external apparatus, of the power interruption.

3. Laundry treatment appliance (1) according to claim 1 or 2, **characterised in that** the laundry treatment appliance (1) is arranged to not adapt the laundry treatment program in the case of a short duration of the power interruption (S4).

4. Laundry treatment appliance (1) according to any one of the preceding claims, **characterised in that** the laundry treatment appliance (1) is a laundry drying appliance.

5. Laundry treatment appliance (1) according to claims 1, 3 and 4, **characterised in that** the laundry treatment phase is a main drying phase and the laundry treatment appliance (1) is arranged particularly to end the main drying phase in temperature-controlled manner.

6. Laundry treatment appliance (1) according to claims 1 and 4, **characterised in that** the laundry treatment phase is a main drying phase, the duration of the power interruption is a long duration and the laundry treatment appliance (1) is arranged to end the main drying phase with attainment of a predetermined maximum amount of energy and/or maximum drying time.

7. Laundry treatment appliance (1) according to claims 1 and 4, **characterised in that** the laundry treatment phase is a heating-up phase.

8. Laundry treatment appliance (1) according to claims 1 and 7, **characterised in that** the duration of the power interruption is a long duration and the laundry treatment appliance is arranged to carry out the heating-up phase again.

9. Laundry treatment appliance (1) according to one of claims 7 and 8, **characterised in that** the laundry treatment appliance (1) is arranged to repeat a load measurement.

10. Laundry treatment appliance (1) according to claims 6 and 7, **characterised in that** the duration of the power interruption is a long duration and the laundry treatment appliance (1) is arranged to recalculate a calculation of switch-off values for the heating-up phase and/or the main drying phase on basis of the duration.

11. Laundry treatment appliance (1) according to any one of the preceding claims, **characterised in that** the laundry treatment appliance (1) is a laundry washing appliance.

12. Method of operating a laundry treatment appliance (1), in which a duration of the power interruption is determined (S2), wherein the duration is divided into a short duration equal to or shorter than a predetermined threshold value and a long duration greater than the predetermined threshold value and in which after the power interruption a laundry treatment program, which has run during the power interruption, is adapted to the duration of the power interruption (S6), the laundry treatment program is differently adapted depending on a kind of duration and/or a kind of a laundry treatment phase running during the power interruption (S3, S4, S6) and the adapted laundry treatment program is continued (S7),
**characterised in that**
the laundry treatment phase is a main treatment phase, wherein
a) an additional time requirement and/or energy requirement is calculated on the basis of the determined duration of the power interruption and is added to a time requirement and/or energy requirement originally calculated before the power interruption or
b) after the power interruption a reheating phase, by means of which a temperature of at least one process medium is equated with a level before the power interruption, is introduced into the laundry treatment program, wherein the duration of the power interruption is a long duration, and
thereafter the main treatment phase is continued as in the case of a short duration of the power interruption, particularly the main treatment phase is ended in temperature-controlled manner.

## Revendications

1. Appareil de traitement de linge (1), conçu pour exécuter au moins un programme de traitement de linge et pour établir une durée d'une coupure de courant (S2), la durée étant divisée en une courte durée égale ou inférieure à une valeur seuil prédéterminée et une longue durée supérieure à la valeur seuil prédéterminée, pour adapter après la coupure de courant un programme de traitement de linge s'étant déroulé pendant la coupure de courant à la durée de la coupure de courant (S6), pour adapter différemment le programme de traitement de linge en fonction d'un type de durée et/ou d'un type de phase de traitement de linge se déroulant pendant la coupure de courant (S3, S4, S6) et pour poursuivre le programme de traitement de linge adapté (S7),
**caractérisé en ce que**
la phase de traitement de linge est une phase de traitement principale et l'appareil de traitement de linge (1) est conçu
a) pour calculer, sur la base de la durée établie de la coupure de courant, le temps et/ou l'énergie supplémentaire nécessaire et pour l'ajouter au temps et/ou à l'énergie nécessaire calculée initialement avant la coupure de courant, ou
b) pour intégrer dans le programme de traitement de linge, après la coupure de courant, une phase de réchauffage permettant d'aligner une température d'au moins un fluide de processus sur un niveau avant la coupure de courant, la durée de la coupure de courant étant une longue durée, puis
pour poursuivre la phase de traitement principale comme dans le cas d'une courte durée de la coupure de courant, en particulier pour commander la fin de la phase de traitement principale en fonction de la température.

2. Appareil de traitement de linge (1) selon la revendication 1, **caractérisé en ce que** le dispositif de commande de l'appareil de traitement de linge comprend un moyen de lecture adapté à évaluer la durée de la coupure de courant transmise par un appareil externe.

3. Appareil de traitement de linge (1) selon la revendication 1 ou 2, **caractérisé en ce que** l'appareil de traitement de linge (1) est conçu pour ne pas adapter le programme de traitement de linge dans le cas d'une courte durée de la coupure de courant (S4).

4. Appareil de traitement de linge (1) selon l'une des revendications précédentes, **caractérisé en ce que** l'appareil de traitement de linge (1) est un sèche-linge.

5. Appareil de traitement de linge (1) selon les revendications 1, 3 et 4, **caractérisé en ce que** la phase de traitement de linge est une phase de séchage principale et l'appareil de traitement de linge (1) est en particulier conçu pour commander la fin de la phase de séchage principale en fonction de la température.

6. Appareil de traitement de linge (1) selon les revendications 1 et 4, **caractérisé en ce que** la phase de traitement de linge est une phase de séchage principale, la durée de la coupure de courant est une longue durée et l'appareil de traitement de linge (1) est conçu pour mettre fin à la phase de séchage principale lorsqu'une quantité d'énergie maximale prédéterminée et/ou un temps de séchage maximal prédéterminé est atteint.

7. Appareil de traitement de linge (1) selon les revendications 1 et 4, **caractérisé en ce que** la phase de traitement de linge est une phase de chauffage.

8. Appareil de traitement de linge (1) selon les revendications 1 et 7, **caractérisé en ce que** la durée de la coupure de courant est une longue durée et l'appareil de traitement de linge (1) est conçu pour exécuter à nouveau la phase de chauffage.

9. Appareil de traitement de linge (1) selon l'une des revendications 7 ou 8, **caractérisé en ce que** l'appareil de traitement de linge (1) est conçu pour répéter une mesure de la charge.

10. Appareil de traitement de linge (1) selon les revendications 6 et 7, **caractérisé en ce que** la durée de la coupure de courant est une longue durée et l'appareil de traitement de linge (1) est conçu pour procéder à un nouveau calcul de valeurs de coupure pour la phase de chauffage et/ou la phase de séchage principale sur la base de la durée.

11. Appareil de traitement de linge (1) selon l'une des revendications précédentes, **caractérisé en ce que** l'appareil de traitement de linge (1) est un lave-linge.

12. Procédé pour faire fonctionner un appareil de traitement de linge (1), selon lequel une durée de la coupure de courant est établie (S2), la durée étant divisée en une courte durée égale ou inférieure à une valeur seuil prédéterminée et une longue durée supérieure à la valeur seuil prédéterminée, et selon lequel, après la coupure de courant, un programme de traitement de linge s'étant déroulé pendant la coupure de courant est adapté à la durée de la coupure de courant (S6), le programme de traitement de linge est adapté différemment en fonction d'un type de durée et/ou d'un type de phase de traitement de linge se déroulant pendant la coupure de courant (S3, S4, S6) et le programme de traitement de linge adapté est poursuivi (S7),
**caractérisé en ce que**
la phase de traitement de linge est une phase de traitement principale,
a) sur la base de la durée établie de la coupure de courant, un temps et/ou une énergie supplémentaire nécessaire étant calculée et ajoutée au temps et/ou à l'énergie nécessaire calculée initialement avant la coupure de courant, ou
b) après la coupure de courant, une phase de réchauffage étant intégrée dans le programme de traitement de linge, permettant d'aligner une température d'au moins un fluide de processus sur un niveau avant la coupure de courant, la durée de la coupure de courant étant une longue durée, puis
la phase de traitement principale étant poursuivie comme dans le cas d'une courte durée de la coupure de courant, en particulier la fin de la phase de traitement principale étant commandée en fonction de la température.
